# EUROPEAN PATENT APPLICATION

(11) **EP 0 999 678 A2**
(43) Date of publication of application: **10.05.2000**
(21) Application number: 99203633.5
(22) Date of filing: 04.11.1999
(51) Int. Cl.: H04L 29/06, H04L 12/64, H04Q 7/22, H04N 7/173

(54) **Systems and methods for integrating video, audio, and mobile radiophone technology**

(30) Priority: 06.11.1998 US 107488 P; 25.11.1998 US 109937 P; 07.12.1998 US 111264 P
(71) Applicant: CITIBANK, N.A., New York, New York 10043 (US)
(72) Inventor: Horowitz, Edward, Short Hills, NJ 07078 (US)
(74) Representative: Hynell, Magnus

(57) **Abstract**

A cradle for providing video and audio signals to television or other display device such that a user may view data and make transactions. The cradle receives external data via either a wireless telephone network or a land-line based telephone network from a computer, The cradle then combines this external data with data stored in an internal memory or a removable memory device so as to form a composite video image that the user understands.

## Description

The present invention relates to the utilization of telephone and television transmission paths to transmit and receive data to a cradle or set-top box. The cradle or set-top box may add additional data and forward the composite data to display onto a computer monitor, television or other display device.

### BACKGROUND

More companies are offering services and information through electronic means, such as the World Wide Web and Integrated Voice Response Systems, than ever before. The reason for this is two-fold. First, the electronic hardware and software in the systems have advanced enough to allow for rapid switching and data retrieval, such that a customer using an electronic service receives real-time responses. Second, these electronic means are typically cheaper than using personnel to provide services on a one-on-one basis with customers.

One conventional form of conveying information to a customer involves telephone service and computer telephony. In these systems, the customer calls in to a company's computer, which provides voice prompts to the customer to push a key on the phone's keypad. By going through various menus, the customer obtains the information desired by pressing the correct key in response to a computer generated voice.

A second conventional forum, in which a customer may contact a company's services, is through a computer network such as the Internet or the World Wide Web. In this forum, the customer first goes through an internet service provider to gain access to the network and then downloads information from the company's computer or server onto a personal computer.

The above methods suffer from several limitations. In the computer telephony system, the rate at which data is provided to the customer is relatively slow. This is because the data is provided serially in a verbal format. Thus, if the customer wants one field of information from a list of fields provided, the customer must wait and listen through the unneeded fields before finally getting to the data field of interest. For example, a customer will have to listen to the computer provide balance information before obtaining available credit information, even when the customer only wants to know his or her available credit.

In the computer network based method of accessing a company's services, there is a problem of download time as well. Typically, a Web page located on a company's server must be reconfigured into packets and transmitted over a network to the customer's personal computer. This process of manipulating the data is burdensome on the company's server. In addition, transmitting an entire Web page of information takes a considerable amount of time. Finally, while personal computers are becoming more commonplace in most homes, not every home has a personal computer or access to the Web.

### BRIEF DESCRIPTION OF THE DRAWINGS

The accompanying drawings, which are incorporated in and form a part of the specification, illustrate preferred embodiments of the present invention and, together with the description, disclose the principles of the invention:
Figure 1 is a diagram of a system according to an embodiment of the present invention;
Figure 2 is a diagram of a system according to a second embodiment of the present invention;
Figure 3 is the front view of the cradle in accordance with an embodiment of the present invention;
Figure 4 is a top view of the cradle in accordance with an embodiment of the present invention;
Figure 5 is a view of an adapter mechanism, allowing a particular brand and model of mobile telephone to mate to the cradle of the present invention;
Figures 6 and 7 are flowcharts representative of methods in accordance with an embodiment of the present invention;
Figures 8-19 are screens produced by the system in accordance with an embodiment of the present invention;
Figure 20 is a schematic view of the circuitry of the cradle in accordance with an embodiment of the present invention;
Figures 21 and 23 are examples of template data in accordance with an embodiment of the present invention; and
Figures 22 and 24 are examples of transmitted data, corresponding to the templates of Figures 21 and 23, respectively, in accordance with an embodiment of the present invention.

### DETAILED DESCRIPTION OF THE DRAWINGS

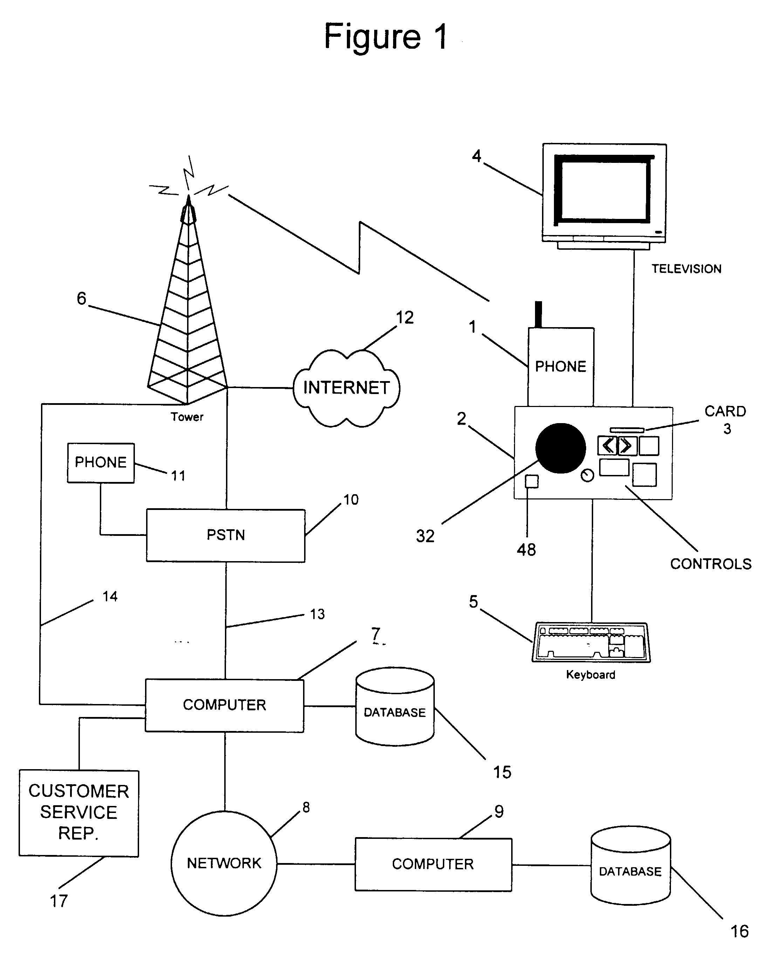

Figure 1 shows a system in accordance with a first embodiment of the present invention. A mobile telephone 1 is coupled to cradle 2, which is used to communicate the data received by mobile telephone 1 to television/monitor 4. A smartcard processor and/or memory device 3 fits into a slot or is otherwise coupled to cradle 2 and provides data to cradle 2. Keyboard 5 (optional) is used by the user to input data into cradle 2. Mobile telephone 1 receives and transmits data to a mobile telephone network 6, which is represented in the figure by an antenna tower.

Mobile telephone network 6 is directly coupled in one embodiment, to computer 7 via connector 14. Computer 7, receives and transmits data to and from mobile telephone 1. In this first implementation of the first embodiment, computer 7 and mobile telephone network 6 may be privately owned, such that service provided to the user is proprietary.

In another embodiment, mobile telephone network 6 is coupled to the Public Switched Telephone Network (PSTN) 10 via connection 14. This type of connection is conventional to conversation-based use of mobile telephone network 1. The user speaks to another person using telephone 11, which may be coupled to a Plain Old Telephone Service (POTS) line or may also be mobile, using PSTN 10 and mobile telephone network 6 as conduits.

Additionally, the use of PSTN 10 allows mobile telephone 1 to be coupled to computer 7. In this implementation, computer 7 may represent an Internet Service Provider (ISP) or other entity separate from mobile telephone network 6.

Regardless of the structure of computer 7, it may also be coupled to other devices. For example, computer 7 is coupled to database 15 in another embodiment of the present invention. In this manner, data from database 15 is downloaded to mobile telephone 1. Similarly, data is also transmitted through mobile telephone 1 for storage into database 15.

In yet another embodiment, computer 7 is coupled to another network 8. In this manner, computer 7 receives data from another computer 9 via network 8, where it is then forwarded to mobile telephone 1.

Another way to understand this connection is to draw a comparison with Web surfing. In Web surfing, the user uses his phone, represented by mobile telephone 1, to dial into an Internet Service Provider (ISP), represented by computer 7. It should be noted that other equipment such as modems and a network, are also part of the hardware owned by an ISP. The user may then receive data proprietary to the ISP, represented by database 15, or obtain data from other computers, represented by 8, and the computer's proprietary data, represented by database 16.

In another embodiment, mobile telephone network 6 is directly coupled to the Internet and/or World Wide Web 12.

In another embodiment, a customer service representative (CSR) 17 is also provided. In this manner, a user using cradle 2, as will be described later, may contact a person to assist the user in understanding the data being received as well as in operating cradle 2 and affiliated devices.

It should also be noted that any of the embodiments discussed above may be combined into a single implementation. For example, all five embodiments are shown in Figure 1 and all five may operate together. Thus, the removal of customer service representative 17, network 8 and computer 9, or either connection 13 or 14 is not a departure from the present invention.

The various embodiments obtain data from various sources and combine them to form one complete message via cradle 2. Data comes from the following four sources: 1) mobile telephone 1, 2) cradle 2, 3) smartcard processor/memory device 3, and 4) user inputs. A complete message contains either video data, which is displayed on monitor 4, audio data, which is output to a speaker, or a combination of both.

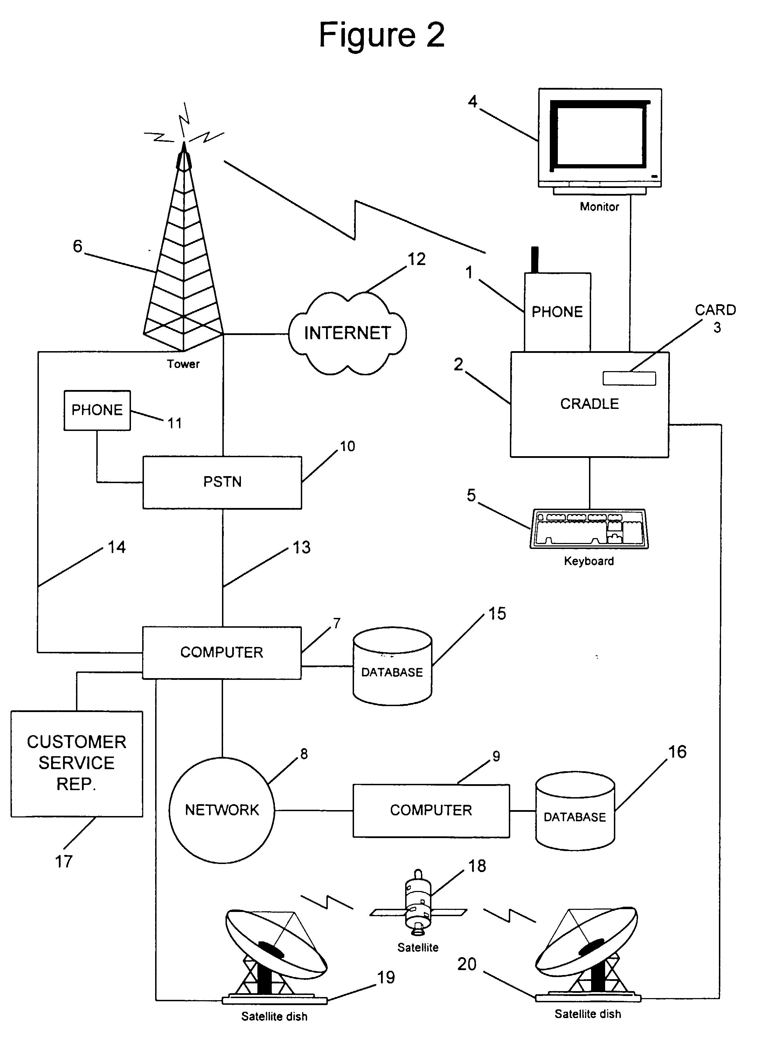

Figure 2 is another embodiment of a system in accordance with the present invention. The system of Figure 2 is similar to the system of Figure 1, except Figure 2 also shows satellite subsystem, comprised of satellite dishes 19, 20 and satellite 18. Satellite dish 20 receives real time video and audio signals transmitted from satellite dish 19 via satellite 18, which are integrated onto a composite screen similar to the screens described later. One such screen might include a plurality of financial data a customer uses, along with a corner real-time image of a CSR. The CSR can, for example, explain everything the customer is seeing on the screen and is also able to make hand gestures in general directions showing the customer where certain bits of information are located. It should be noted that other television "receivers" such as cable boxes or antennas for broadcast television signals that are then de-scrambled may be used in lieu of the satellite system shown in Figure 2.

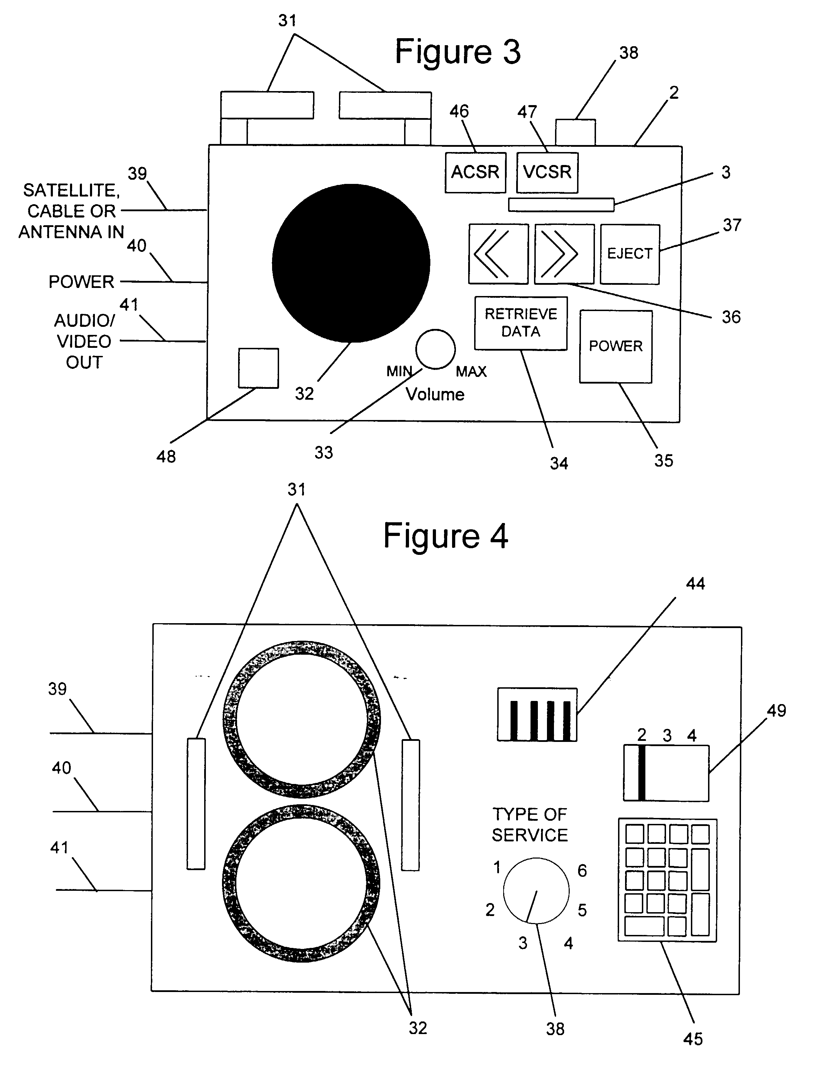

Figure 3 shows a front view of a first embodiment of cradle 2 in accordance with the present invention. A user turns on cradle 2 via "Power" button 35. A smartcard processor and/or memory device 3, or a device such as a magnetic disk or magnetic strip card is inserted into the slot shown. The smartcard processor/memory device 3 is ejected from cradle 2 by the user actuating the "Eject" button 37. In one embodiment of cradle 2, audio signals are provided to the user via speaker 32. These sounds may be pre-recorded voice prompts, instructions and descriptions from a CSR or other sounds such as bells and beeps. The volume of sound emanating from speaker 32 is controlled via "Volume" knob 33. In another embodiment of cradle 2, a user may speak directly to a CSR or leave a message by speaking into microphone 48. In another embodiment, a CSR may be contacted using audio signals only by the user actuating the Audio Customer Service Representative ("ACSR") button 46. Similarly, a video conference may also be established between a Video Customer Service Representative ("VCSR") by the user actuating the "VCSR" button 47.

Buttons 36 allow the user to flip through screen templates stored locally in cradle 2 or in smartcard processor/memory device 3 as will be described later. The "Retrieve Data" button 34 allows the user to retrieve specific data to fill in blank spaces in a selected screen template as will also be described later.

Power is supplied to cradle 2 via power connection 40. Television signals are input into cradle 2 via the "Satellite, Cable or Antenna" connection 39. Audio and video signals are transmitted to monitor 4 via the "Audio/Video Out" connection 41. Couplings 39-41, such as conductors, transmit data, as well as power, to and from the cradle. Cradle 2 may handle many types of connectors to and from television/monitor 4. For example, going out from cradle 2 into television/monitor 4 may be standard audio and video jacks, a 75 Ω antenna/cable connector, or S-video, and corresponding cable(s) 41. Additionally, cradle 2 also accepts standard audio and video inputs, a 75 Ω antenna/cable connector input or an S-video, and corresponding cable(s) 39.

Figure 4 is a top view of cradle 2 in an embodiment of cradle 2 in accordance with the present invention. In one embodiment of cradle 2, a telephone handset or mobile telephone is placed face down onto foam cushions 32. Clips 31 hold the handset, or mobile or wireless telephone onto cradle 2. Foam cushions 32 and clips 31 are typically used for analog phones that receive and transmit data using analog signals. These analog signals are converted to digital signals as described later.

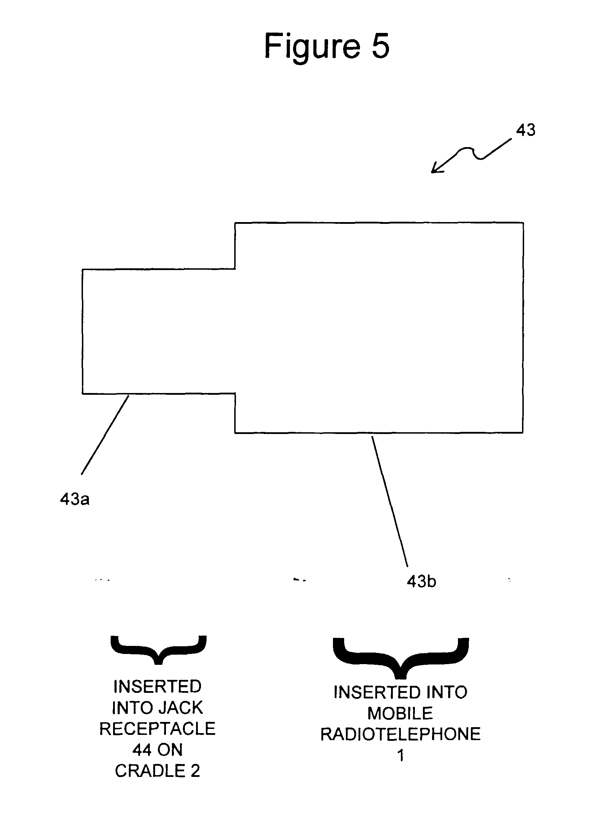

Should the customer own a mobile telephone, he/she may plug the phone into an adapter 43, shown in Figure 5. End 43a fits into jack receptacle 44 on cradle 2. End 43b is specific to the make and model of mobile telephone 1 used by the customer. It is more cost efficient to build a standard cradle 2 with a standard jack receptacle 44 along with a plurality of accompanying adapters 43, each having a specialized end for mobile phones. Using adapter 43 and jack receptacle 44 allows signals to be transferred more efficiently and precisely between the telephone and cradle 2.

Adapter 43 may be a simple connecting device or it may also perform impedance matching for improved signal transmission. In addition, the jack receptacle 44 and adapter 43 also provide power to mobile telephone 1. In this manner, the customer may connect mobile telephone 1 to cradle 2 not only to charge up the battery, but also to supply power to mobile telephone 1 when the customer is using it in the cradle.

As shown in Figure 4, knob 38 allows the customer to customize the cradle to work with a specific telephone. As an example, setting 1 corresponds to using the Dual Tone Multifrequency (DTMF) capabilities of a phone placed onto foam cushions 32 via clips 31. Setting 2 corresponds to using a digital mobile telephone 1. Setting 3 corresponds to using an analog mobile telephone via foam cushions 32 and clips 31. Additionally, knob 38 allows a customer to designate a specific brand of mobile telephone. Keypad 45 allows the user to enter data. Switch 49 allows the user to select the television channel over which the outgoing signal is modulated.

The need to have a plurality of methods to download data into cradle 2 may be necessary if the user or builder of the present wishes to use one or more of the plurality of the available channels for carrying data to and from a mobile telephone. Two of these channels are the forward audio channel, connecting the individual who made the call to the recipient of the call, and the reverse audio channel, from the recipient of the call to the calling individual. These forward and reverse channels carry audio data and are typically used in the present invention to provide real-time audio communication between the customer and the customer service representative.

Another channel used by many mobile telephones is the data channel. Examples of data channel usage include the Short Message Service (SMS), wireless Internet Protocol (wireless IP), wireless application protocol (WAP), etc. The data channel communicates data between mobile telephone 1 itself, and the supporting mobile telephone system, represented by the mobile telephone system 6. By using both the audio channels and the data channel, cradle 2 may transmit and receive both types of information simultaneously. In this situation, a customer service representative may push data onto the screen of television/monitor 4 via a data channel and talk to the customer via an audio channel at the same time.

### DESCRIPTION OF PROCESSES

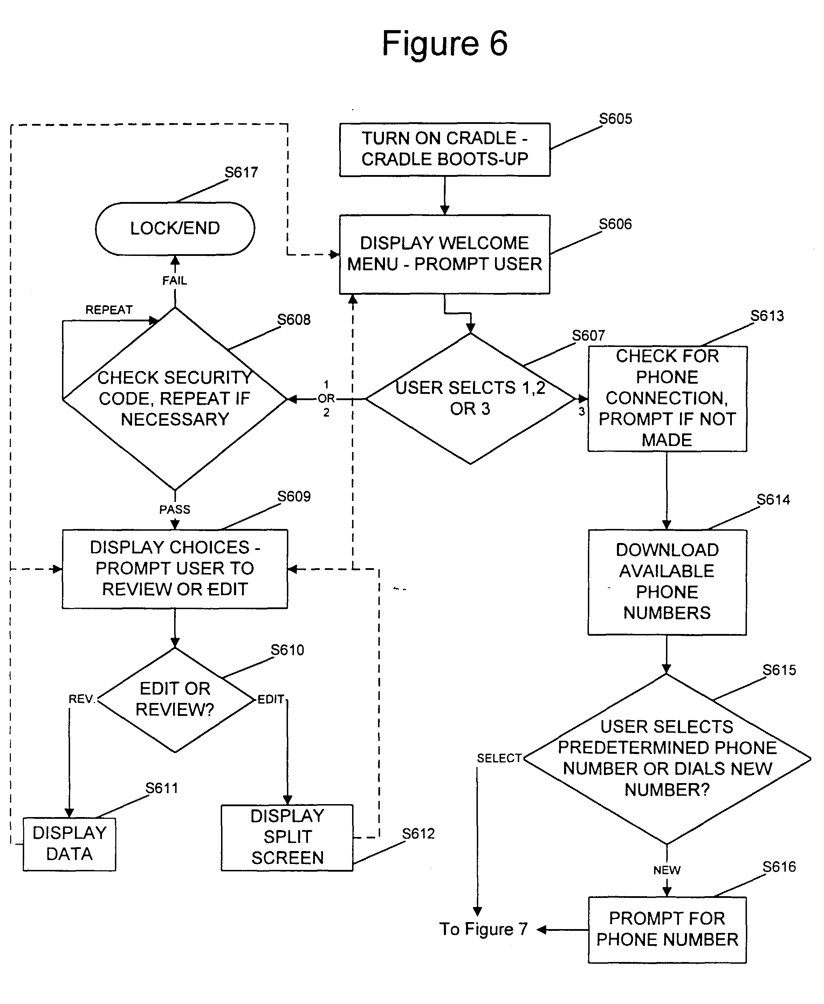

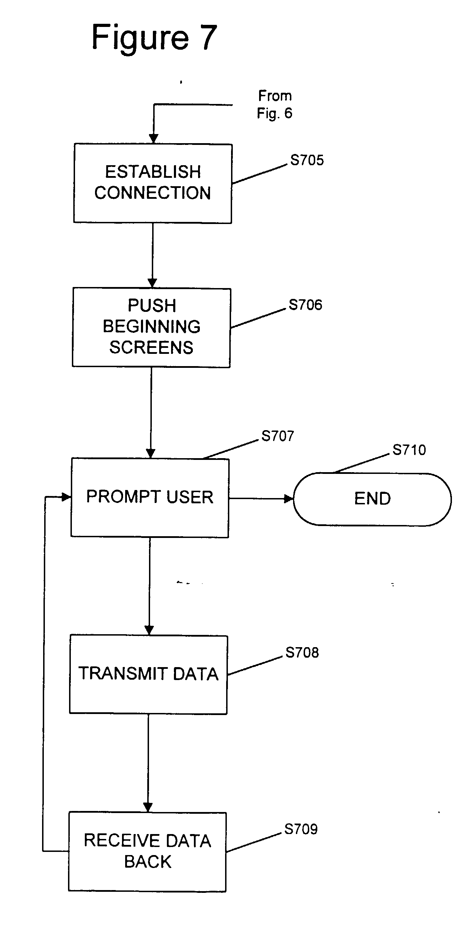

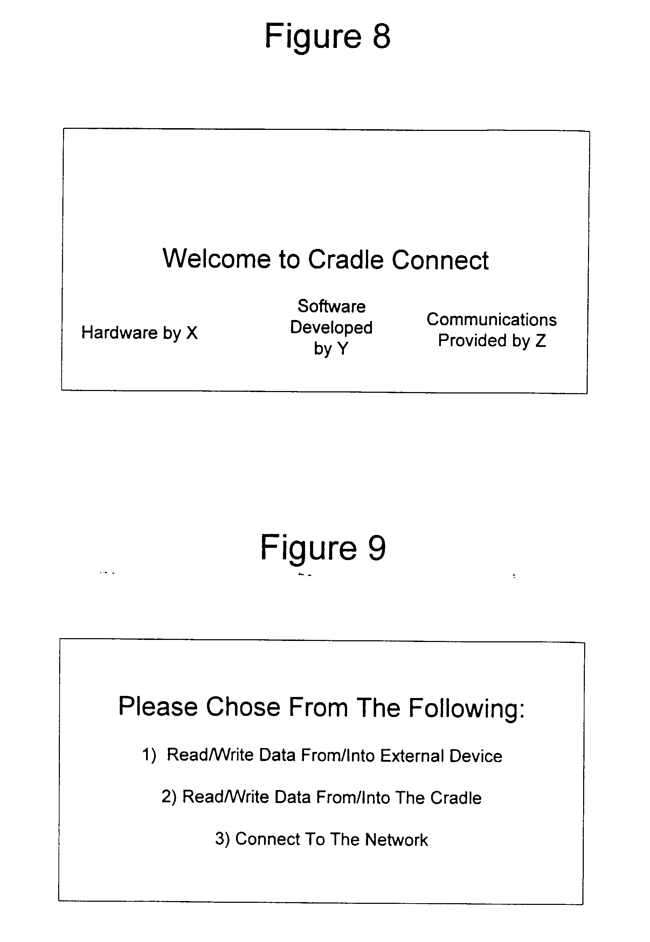

Figure 6 is a flow chart for a process implemented by the present invention. At block S605, the user turns on cradle 2 and cradle 2 boots-up. Once cradle 2 is on, it automatically displays a "Welcome" screen as shown in Figure 8 at block S606. This "Welcome" screen provides information such as the maker of cradle 2, any corporate affiliations with the maker of cradle 2, any network affiliations and year and version number of any software used to operate cradle 2. After the "Welcome" has been displayed for a predetermined period, cradle 2 next displays the menu screen shown in Figure 9. In this screen, the user is prompted to determine if he/she wishes to review data stored on a smartcard/processor 3, data stored in cradle 2 itself or establish a network connection via mobile telephone 1. The user may use the keypad on mobile telephone 1, keypad 45 on cradle 2 itself or auxiliary keyboard 5 to make his/her selection. It should be noted all of these input devices may be used to input data at any given time in a preferred embodiment of the present invention. Thus, during a single communication session between cradle 2 and external computer systems and/or customer service representatives, a user may use all three forms of input into cradle 2 without re-booting.

It should also be noted where the data to form these screen originates in accordance with preferred embodiments of the present invention. These screens are generic to cradle 2 and do not rely on data downloaded from smartcard processor/memory device 3 or downloaded from external sources via mobile telephone 1. Thus, the data to build these screen is downloaded from a non-volatile memory within cradle 2 as will be described later.

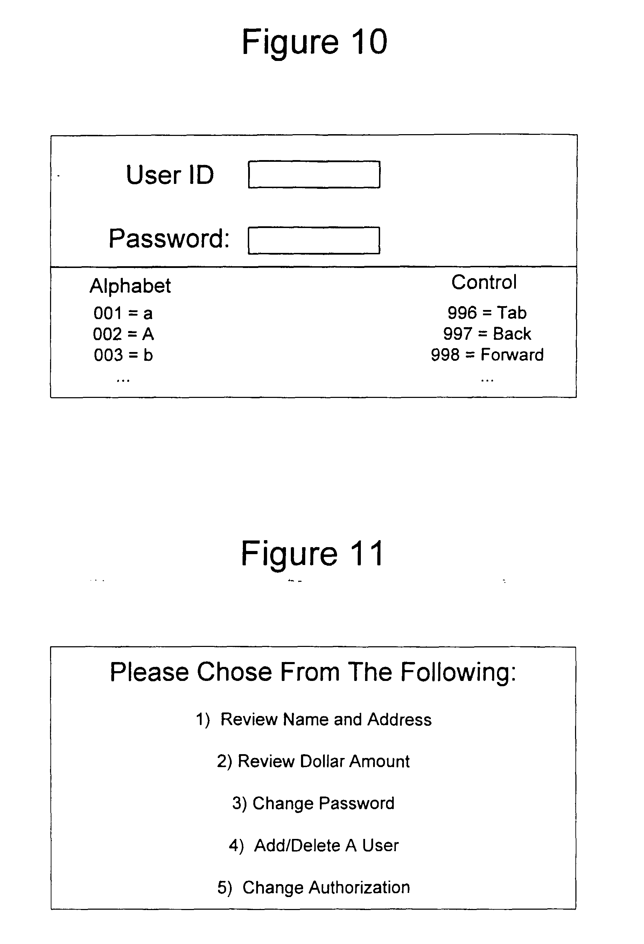

At block S607, cradle 2 determines what the user's input is. If the user enters a "1" or a "2," the cradle knows that a connection to external data sources is unnecessary since the user is only requesting data local to cradle 2 itself or smartcard processor/memory device 3. The process continues at block S608 where a security check is performed. Figure 10 is a screen a user users to enter the appropriate data. It should be noted that the user ID field may be automatically filled by downloading data from either cradle 2 or smartcard processor/memory device 3. This is equivalent to having cradle 2 or smartcard processor/memory device 3 personalized for one individual. In an alternative embodiment, cradle 2 or smartcard processor/memory device 3 are generic across a plurality of users.

Also in block S608 user enters his/her password and the entered data is compared with data stored either in cradle 2 or smartcard processor/memory device 3, whichever corresponds to the access the user is requesting. Typically, the user will be given two or three opportunities if he/she fails to enter to proper user ID/password combination. Should the user fail to enter the correct user ID/password combination after a select number of attempts, cradle 2 and/or smartcard processor/memory device 3 is "locked" to prevent further usage until an authorized user unlocks it/them at block S617.

Once the user enters an appropriate user/password combination at block S608, cradle 2 forwards a menu at block S609 corresponding to the types of data manipulation the user may perform. An example of such a menu is shown in Figure 11. In the example shown, a user may 1) Review name and address information; 2) Review a dollar amount (typically only available on smartcards); 3) Change appropriate password; 4) Add or delete a user (i.e. a child becomes old enough so as to be added as a user either to cradle 2 or smartcard processor/memory device 3, or when a child moves out of the house) or 5) Change authorization(s) (i.e. what a given user may do as far as making transactions or accessing secure information; as an example, child user may not be authorized to buy goods using cradle 2, but may be authorized to receive weather information).

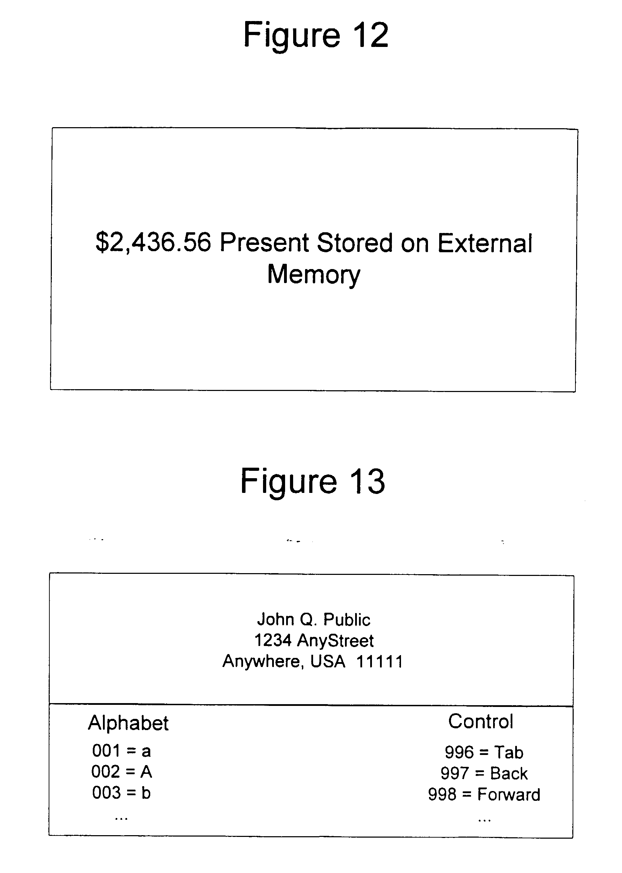

If cradle 2 determines that the user has selected a review data option, (i.e. options 1 and 2 in Figure 11), cradle 2 obtains the desired data from either it's own non-volatile memory or from the smartcard processor/memory device 3, whichever is applicable, and uses that data to form the screen for the user's viewing at block S611. An example of such a screen is shown in Figure 12. When the user is done viewing the screen, he/she uses a data input device to return control either to block S609 or block S606.

If cradle 2 determines the user selects an edit data option at block S610, i.e. options 3-5 in Figure 11, cradle 2 obtains the desired data from either it's own non-volatile memory or from the smartcard processor/memory device 3, whichever is applicable, and uses that data to form the screen for the user's viewing at block S612. In addition, cradle 2 displays a master key list that allows the user to enter a series of numbers that correspond to a desired letter or symbol. An example of such a screen is shown in Figure 13. For example, should the user enter a 001, the letter "a" will appear in the desired field. Similarly, control keys are also available using the limited keypad of mobile telephone 1 or keypad 45 shown in Figure 4 (i.e. tabbing through the various fields of data entry). It should be noted that if the user uses auxiliary keyboard 5, he/she may type in the characters directly without relying on the master key list. Once the user edits the appropriate information, cradle 2 rewrites the data, either into smartcard processor/memory device 3 or the non-volatile memory within cradle 2. When the user is done editing the data, he/she uses a data input device to return control either to block S609 or block S606.

If at block S607 the user enters a "3" so as to establish a network connection, the process continues at block S613 where cradle 2 determines if a telephone is coupled to cradle 2. This is accomplished via a handshaking protocol via jack receptacle 44 or by sending an audio signal to the phone being held by foam cushions 32 and clips 31 and registering the feedback of that signal into cradle 2. If it is determined that there is no phone coupled to cradle 2 at block S613, cradle 2 displays an error message. Part of that error message includes informing the user he/she needs to push a button on any keypad/keyboard once the telephone is coupled to cradle 2.

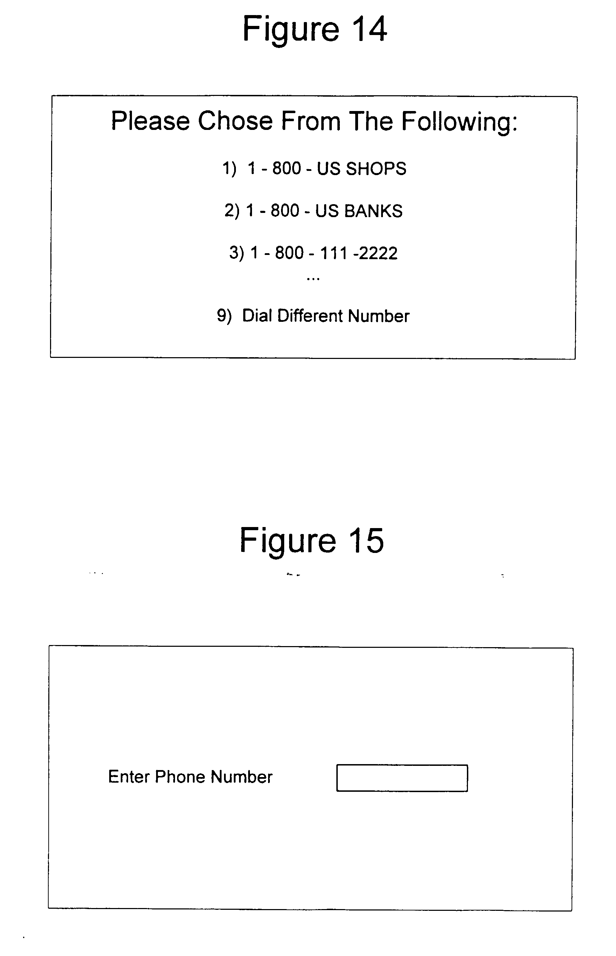

Once a telephone is determined to be coupled to cradle 2 at block S613, cradle 2 retrieves any stored phone numbers from within cradle 2's non-volatile memory and from smartcard processor/memory device 3, depending upon whether or not phone numbers are stored in either and whether or not smartcard processor/memory device 3 is coupled to cradle 2 at block S614. All downloaded phone numbers, if any, are organized onto a menu screen Figure 14. In addition to the phone numbers obtained from the various sources, the user is also given the option to type in a phone number not stored as is also shown in Figure 14.

At block S615, the user makes his/her selection of which phone number to use to connect to external sources of data. If the user selects a number displayed on the screen as shown in Figure 14, a connection is established as described in conjunction with Figure 7. If the user decides to enter a different number than one displayed, cradle 2 provides a phone number entry screen like the one shown in Figure 15 at block S616. The user uses a data input device to enter the phone at block S516 and a connection is established as described in conjunction with Figure 7.

Figure 7 shows a method for connecting to external sources and displaying screens to the user based upon externally collected data and data local to cradle 2 and smartcard processor/memory device 3 in accordance with an embodiment of the present invention. At block S705, cradle 2 forwards the desired phone number to mobile telephone 1. Mobile telephone 1 "dials" the number and a connection is established with an external system using conventionally known methods. It should be noted that a connection may be established in a plurality of ways. Two ways are shown in Figure 1 where mobile telephone network 6 is proprietary to the company that also owns computer 7 and database 15. Another way includes using PSTN 10 to interconnect mobile telephone network 6 owned by one company to computer 7 and database 15 owned by another. In either method, or other conventional methods not herein described, a connection is established between computer 7 and mobile telephone 1. Once the connection is established, synchronization and other handshaking protocols are initiated to coordinate the sub-systems within cradle 2, described in more detail later, with computer 7. It should be noted that computer 7 is associated with, at most, a few phone numbers, but that different computers 7 are reached via different phone numbers. In other words, dialing 1-800-US-BANKS causes mobile telephone 1 to reach a different computer 7 than dialing 1-800-US-SHOPS.

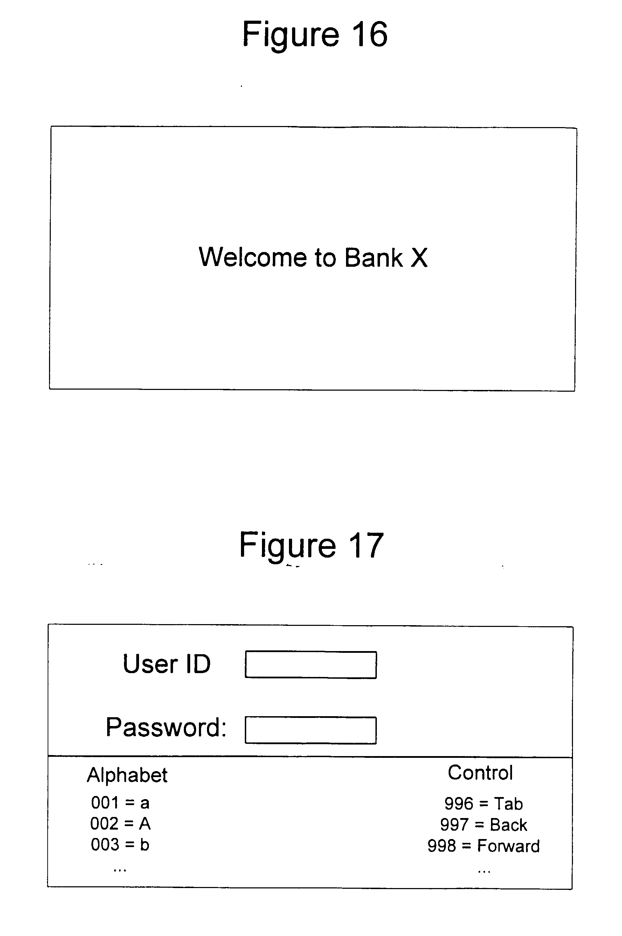

Once the connection is established and synchronization occurs, computer 7 forwards a command to cradle 2 via mobile telephone 1 to display introductory screens at block S606. These introductory screens usually include, for example, a "Welcome" screen and a "Security Access" screen like those shown in Figures 16 and 17. The "Security Access" screen shown in Figure 17 allows the user to obtain access to the services and data provided by computer 7. In this embodiment, since computer 7 issued commands to cradle 2, the timing and content of portions of the screens is controlled via computer 7. For example, computer 7 commands cradle 2 to display the "Welcome" screen of Figure 16 for ten seconds before commanding cradle 2 to display the "Security Access" screen of Figure 17. In addition, screen templates from either cradle 2 or smartcard processor/memory device 3 are downloaded for processing before display on monitor 4 under the command of computer 7. Computer 7 specific data, such as the name "Bank X" is also forwarded cradle 2 via mobile telephone 1 automatically without cradle 2 requesting it. The screen templates and computer 7 specific data are combined to form composite screens as will be described later. It should also be noted that in an alternative embodiment of the present invention, all of the data used to build and control the displaying of these introductory screens resides in either cradle 2 or smartcard processor/memory device 3, or a combination thereof, without requiring input from computer 7.

In addition to computer 7 controlling the content and duration of the introductory screens in one embodiment, computer 7 also stores the user identifying data and correlates it with a port through which the connection is established. In this manner, when a data request comes through a specific port, computer 7 will obtain the user specific based on the association of the user identification and specific port so as to avoid the user needing to continually identify himself/herself. This also aids computer 7 in forwarding data to the correct user when a plurality of users are accessing computer 7 at one time.

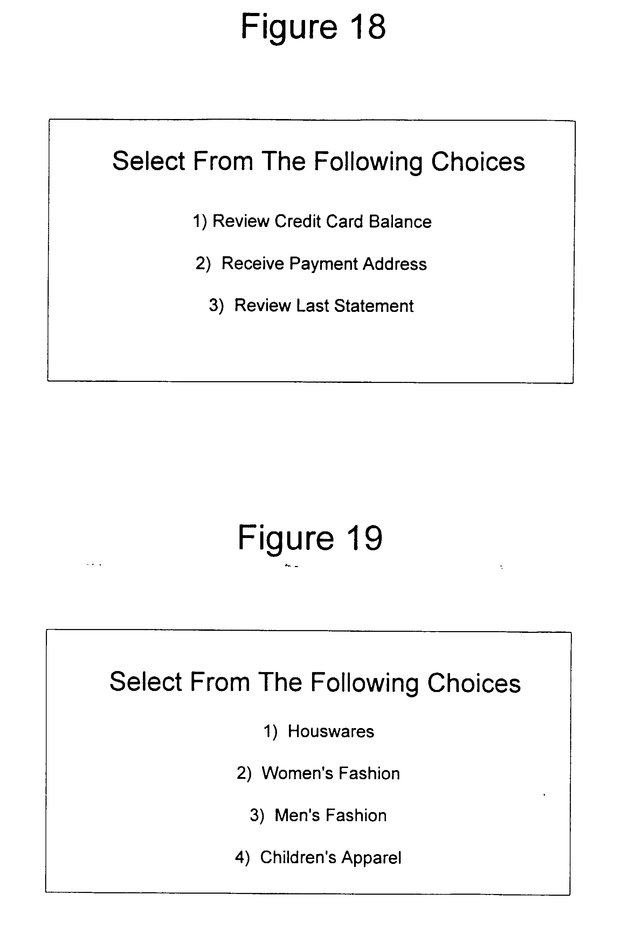

After the introductory screens are displayed and the user has entered the appropriate data, a menu screen is displayed giving the user options like the ones shown in Figures 18 and 19. Figure 18 is a screen associated with obtaining financial data while Figure 19 is a screen associated with purchasing goods. The smartcard menu screens may come from computer 7 in one embodiment of the present invention, but in a preferred embodiment of the present invention they come from smartcard processor/memory device 3 that is designed to work with computer 7. In either method, the screen is displayed on monitor 4 at block S707. Also in block S707, the user uses a data input device to make a selection. The selection is used by cradle 2 to access another screen stored locally and display it to the user.

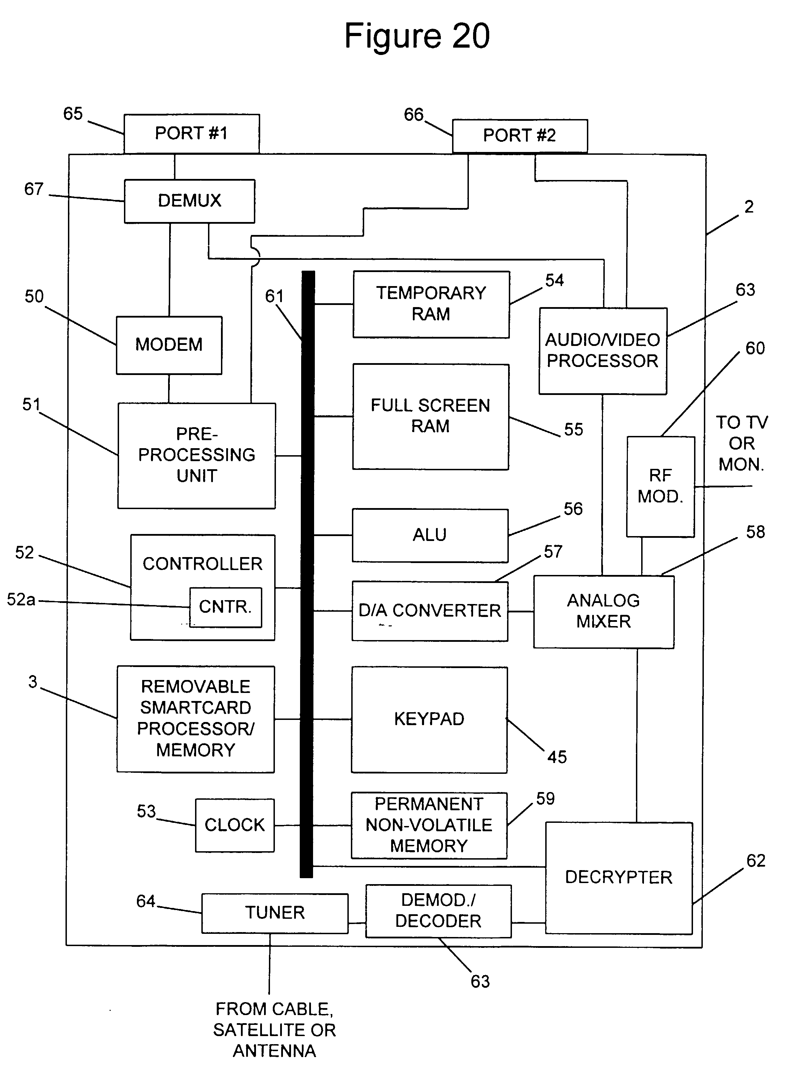

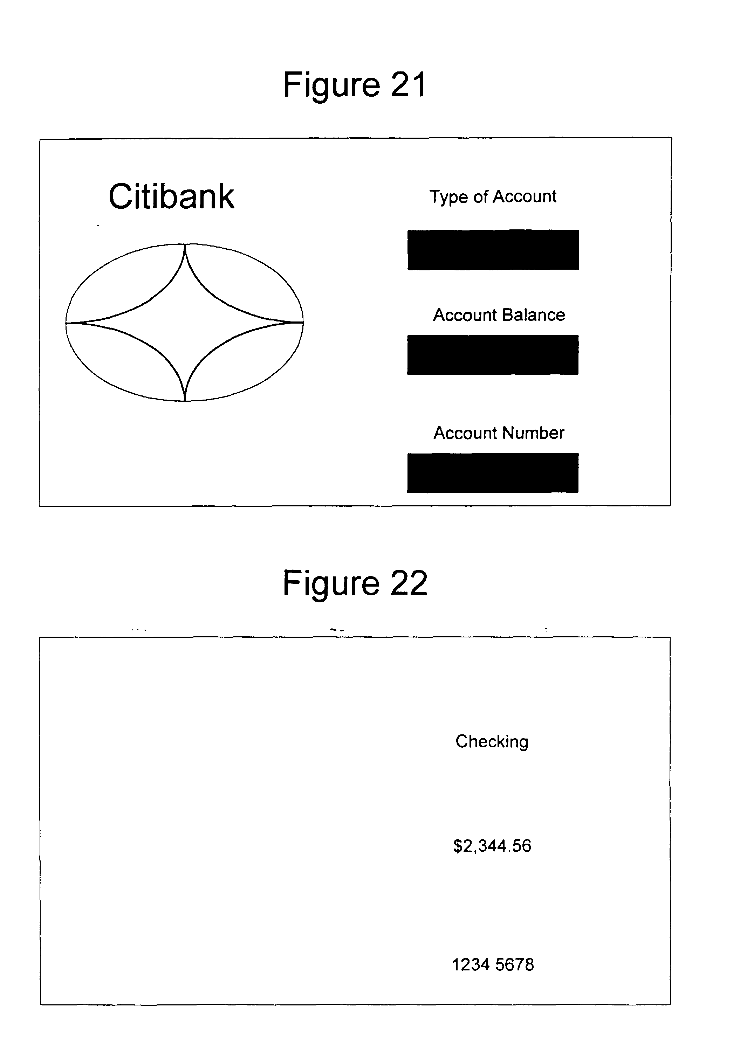

Eventually, a screen is reached that is missing information. Such a screen is called a screen template. Typically the missing information is user specific and is stored externally to cradle 2 and smartcard processor/memory device 3. An example of the need for external data is the user requesting to know what his/her checking account balance is at that moment. Examples of screen templates are shown in Figures 20 and 22.

When the customer obtains a screen template, the user hits the "Retrieve Data" key 34, which prompts cradle 2 to send a signal to computer 7 via mobile telephone 1 and mobile telephone network 6 at block S708. This "retrieve data signal" tells computer 7 what data is needed. Generally, this request signal is encoded so as to correspond with a known screen template or format at computer 7. Cradle 2 obtains the needed screen template identifying data from the screen the user is viewing. This screen identifying data is combined with a number indicating a particular smartcard processor/memory device 3 or cradle 2 independent of a smartcard processor/memory device 3 (i.e., cradle 2 is being used without a smartcard processor/memory device 3). These two parts of data are combined, encrypted and forwarded to mobile telephone 1 for packeting and transmission. For example, a "retrieve data signal" such as 34-256-2 transmitted from cradle 2 to computer 7 via mobile telephone 1 tells computer 7 to acquire all the data associated with a particular screen, say 2, of memory 256. In this manner, computer 7 intelligently issues the appropriate query(ies) to obtain data such as the account name and balance without mobile telephone 1 needing to transmit a large amount of data to formulate the request.

Once computer 7 has queried the appropriate databases to obtain the desired data corresponding the template screen, it forwards only the user specific data back to cradle 2 via mobile telephone 1. Cradle 2 receives the user specific data at block S709, merges that data with template screen data and forms the composite screens. The details of how the external user specific data is merged with the screen template data are described later. Once the composite screen is displayed on monitor 4, the user enters more data either to obtain additional data from a local memory or external source, or end the process at step S610.

The above example is a menu driven approach of obtaining the appropriate template screen data and using it to obtain user specific data. In another embodiment, the customer "flips" through the screen templates either by using button S36 or by pressing a key on mobile telephone 1 or keypad 45. This function is analogous to flipping through a compact disk's musical selection by advancing to the next or previous song from the one currently selected. Here, the screen templates are in some numeric order and not provided in a menu driven order. Once the user has flipped to the screen template he/she desires, he/she uses retrieve button 34 to issue the request for specific data as described above.

It should be noted that this method reduces the amount of data being transmitted via mobile telephone network 6 and potentially PSTN 10. Only screen identifying data is forwarded to computer 7 from cradle 2. Computer 7 determines that that screen requires specific data, i.e. checking account balance, identifies the user via the port association, issues a query and forwards the numbers back to cradle 2. Cradle 2 interprets those numbers, generates video data and mergers the video data onto the template screen forming a composite screen that informs the user what his/her balance is.

The methods described are also not limited to a single smartcard processor/memory device 3 being used in one communication session. For example, if a user establishes a communication path with a computer 7 programmed for shopping, he/she would most likely use smartcard processor/memory device 3 associated with that company and the shopping software on computer 7. However, suppose the user decides to purchase a good and wants to pay for it by withdrawing money from his/her money stored on another smartcard processor/memory device 3. The user would merely need to replace the shopping based smartcard processor/memory device 3 with his/her money based smartcard processor/memory device 3 when instructed to do so. The money is then withdrawn from the money based smartcard processor/memory device 3 and the user then replaces his/her money based smartcard with the shopping based smartcard processor/memory device 3 when instructed to do so. Thus, a single communication session may involve more than one specific type of smartcard processor/memory device 3.

The methods described are also not limited to sole interaction with computer 7 and database 15. Referring to the shopping example above. If the user decides to pay for the purchase via a credit card, computer 7 (the shopping computer) issues the appropriate queries to computer 8 (the banking computer) and database 16 to obtain authorization for the purchase. In this way, computer 7 in conjunction with smartcard processor/memory device 3 acts as a merchant terminal, and connects to the credit authorization network for approval. Similarly, the user may use an electronic check where an authorization number is forwarded from cradle 2 to computer 7 and then on to computer 8.

### DETAILED DESCRIPTION OF INTERNAL WORKINGS OF CRADLE

Figure 20 shows the internal circuitry of cradle 2 in accordance with a preferred embodiment of the present invention. It should be noted that not all internal features are shown, such as connection to the buttons on the front of cradle 2, speaker 32 or microphone 48. Data signals are transmitted and received using the mobile telephone (not shown) either through port 65 (associated with use via foam cushions 32) or port 66 (associated with use via jack receptacle 44). Data received from port 66 via the data or control channels is forwarded directly into pre-processing unit 51 while data received from port 65 via the audio channels is first demultiplexed from any audio signal by demultiplexer 67, and then is converted into digital signals via modem 50 before being forwarded into pre-processing unit 51. Voice signals either separated from data by demultiplexer 67 when received via port 65 or when received via port 66 are transmitted or received over a voice channel (e.g., a conversation between a customer service representative and customer) are processed directly using audio/video processor 63. It follows that the audio/video processing devices, such as amplifiers and filters, are connected between either an analog or digital telephone, whether mobile or not, and speaker 32 and microphone 48.

Pre-processing unit 51 separates the message or transaction data transmitted from the control data and the address data. An example of this separation is the luminance and chrominance data from the address of the pixel in the screen to be seen by the customer. This function depends on how cradle 2 is working, as described in greater detail below.

Controller 52 contains a counter 52a and controls the various electronic elements shown in Figure 6. Clock 53 synchronizes the various components and temporary RAM 54 receives the process data signals from pre-processing unit 51. Typically, the temporary RAM stores the luminance and chrominance data based on the address data where pre-processing unit 51 separates the two, as described above. Full screen RAM stores a composite of screen signals from temporary RAM 54 and the removable smartcard processor and/or memory device 3. D/A converter 57 converts the digital data from full screen RAM 55 into analog data for display by television/monitor 4. RF Modulator 60 converts the analog signal into a television signal on the appropriate RF channel frequency for the operating locale, depending on the setting of switch 49 (Figure 3). ALU 56 performs arithmetic and logic calculations as needed.

Keypad 45 receives user input. Non-volatile memory 59 holds three types of data. The first is a set of default screens for basic information, such that the system can be used without a removable smartcard processor and/or memory device 3. The second set of data that non-volatile memory 59 holds is graphic data corresponding to ASCII data. In this manner, the server or host may transmit the number "4,000" using ASCII characters, for example, instead of transmitting pixel data to mobile telephone 1. The ASCII data is then used to read non-volatile memory 59 to obtain the pixel level data representing the individual character images of "4,000."

The third type of data stored in non-volatile memory 59 is personalized data, such as the customer's name, address and perhaps some security data such as a Personal Identification Number (PIN). In this way, cradle 2 can be used universally amongst a plurality of different memory devices, such as smartcards, without the customer having to enter this data repeatedly. An example of the universal type of use of a cradle 2 would be between a banking smartcard processor/memory device 3 and a shopping smartcard processor/memory device 3. Both cards need to forward some personal information to the appropriate computer or server, and by storing this data in cradle 2, as long as cradle 2 is turned on, it is possible for the customer to perform banking functions using one smartcard processor/memory device 3, or shop using a second smartcard processor/memory device 3, without having to re-enter personal information such as name, address and phone number after initial authentication, as described in conjunction with the first embodiment. In another embodiment, the user may enter personal information for each smartcard processor/memory device 3 inserted, or not at all if cradle 2 is permanently programmed to hold that data.

The output from D/A converter 57 is transmitted to an analog mixer 58, and, optionally, into RF Modulator 60. Analog mixer 58 receives data from a decrypter 62. Decrypter 62 receives data from tuner 64 and demultiplexer/decoder 63, which in turn receives data from a satellite, cable or antenna. Tuner 64 selects a particular channel from the satellite or cable. Demultiplexer/decoder 63 further extracts only the data or video stream of interest, decoding it if, for example, it is an MPEG (or other digital) video stream, and recomposes it into an analog video signal. Decrypter 62 is used if the input signals are encrypted. If the inputs are not encrypted, such as typical broadcast signals, then decrypter 62 simply forwards the un-encrypted signals to analog mixer 58. If the stream of interest is data rather than video (for example a download of new data to a smartcard processor/memory device 3), then the stream is routed to the preprocessing unit 51, via bus 61.

The function of analog mixer 58 is to combine the audio and video signals received from the satellite, cable or antenna with the composite screen being output from full screen RAM 55 via D/A converter 57. Details of the screen seen by the customer from such a composition of signals are described further below.

Data is transferred between the computer 7 and mobile telephone 1 in one of two ways. The first method employs the voice channels associated with mobile telephone 1. Typical voice communications using a mobile telephone employ both a forward channel and a reverse channel. These voice channels can be established in one of two ways. The first method requires the customer to key in the number of the desired computer 7 and open the channels using conventional telecommunications protocol. Once the customer dials the appropriate number, the customer places the mobile telephone into foam cushions 32 and holds the phone in place using clips 31. Modem 50 translates the audio or DTMF signals received by mobile telephone 1 and forwards data to mobile telephone 1 in audio or DTMF format. Since mobile telephone 1 is face down on cradle 2, the user inputs data using keypad 45 on the top of cradle 2 or keyboard 5. The voice channels remain open to receive and forward data between mobile telephone 1 and the computer 7 until the customer strikes the appropriate keys at the appropriate time, informing the computer 7 to terminate the call. Either prior to, during or after this procedure, the user may insert a smartcard processor/memory device 3 and flip through the various screen templates.

In one embodiment of the present invention, cradle 2 does not transmit customer identification data with every request for data from computer 7. Computer 7 has a plurality of ports. Every customer who dials into computer 7 is assigned a port for that customer's use until the customer terminates the call. Upon establishing this connection, computer 7 retrieves some customer-specific data initially and stores it in a table along with data designating which port that customer is using. Thus, as requests are received through a port, the computer tags that request, or uses other means to keep track of the processing of that data request. Computer 7 derives from the table the customer-specific data, based on the port data assigned to the request. When the data is retrieved from database 15, computer 7 uses the tag port identifier data associated with the retrieved data to route the output to the correct port, and thereby to the correct customer's mobile telephone.

Another method of transmitting data for use in accordance with an embodiment of the present invention involves using the control channels associated with mobile telephones and sending messages over the control channels and/or data channels using SMS, Wireless IP, WAP, or such other data service as is supported on mobile telephone network 6. In this embodiment, the customer plugs mobile telephone 1 into cradle 2 via adapter 43 to establish the connection.

Using the control channel to send messages is a sporadic process. A permanent channel is not opened between mobile telephone 1 and the computer 7. Instead, data is transferred, packaged and sent through the control channel as data is requested and needed.

In this mode, the user sets mobile telephone 1 into cradle 2. Either before, after or concurrently with connection between the phone with cradle 2, the customer inserts a smartcard processor/memory device 3 into cradle 2. The smartcard processor/memory device 3 displays some introductory data screens. The customer flips through the various screens or selects a screen from a menu of screens. Cradle 2 displays the selected screen template to determine if that template is the screen information the customer requested. If the customer determines that the template is the correct screen, the customer either pushes the "Retrieve Data" button on cradle 2 or the appropriate key on the keypad of mobile telephone 1, keypad 45 or keyboard 5.

If the user presses a button on the mobile telephone's keypad, cradle 2 receives this input through adapter 43 and jack receptacle 44, and packages the data request with other data. Otherwise, cradle 2 receives this data directly and packages it with phone number data indicating which computer 7 cradle 2 needs to contact in order to extract the appropriate information. Typically, this data is stored in the smartcard processor/memory device 3 but it could also be stored in cradle 2. Cradle 2 also packages some form of a customer identifier. These four fields in the packet indicate: 1) where the request for information is going; 2) to which particular customer the request for data pertains; 3) the request for specific data itself; and 4) the phone number associated with the customer's mobile telephone. Typically, the request for data itself is a composite of both screen data (e.g., an index) and user input data.

After the request for data is received by the computer 7, the customer identification data and the request itself are used to retrieve the needed data (e.g., a specific customer's checking account balance). The computer 7 then packages the results to transmit them over the data channel to the customer's mobile telephone 1. The computer 7 uses the phone number associated with the customer's mobile telephone 1 to transmit the requested data over the control channel to the correct mobile telephone 1. Mobile telephone 1 forwards the requested data through adapter 43 into cradle 2, and cradle 2 processes the data for displaying it on television/monitor 4, as described above.

Since data is being transmitted back and forth between the computer 7 and cradle 2, computer 7 must keep track of requests for data and forward the data to the correct mobile telephone 1.

In this embodiment, cradle 2 sends customer identifying data along with every request for data. When the customer presses any key on the optional keyboard 5, or keypad of mobile telephone 1 or keypad 46 on cradle 2, cradle 2 transmits that data as a request for data from computer 7 and couples that request for data with customer identification data and mobile telephone 1 identifying data.

As described in the above example, if the customer's balance is $4,000, the server or host need only transmit the ASCII data 4,000 rather than pixel data representing 4,000. This is a considerable savings in data transmission.

If cradle 2 is set up to receive ASCII based data through mobile telephone network 6, from computer 7, then the ASCII data is separated from the control data by the pre-processor unit 51. Controller 52 is set up to control the data flow so that the ASCII data is forwarded into counter 52a. Controller 52 outputs the value of the counter to non-volatile memory 59 and instructs non-volatile memory 59 to receive counter 52a data as an address. The address output from counter 52a, which in an alternative embodiment may be scaled to a different physical address in the ROM, corresponds to the first address of a plurality of addresses containing the pixel level data corresponding to that ASCII character. Counter 52a then counts up, in response to pulses from clock 53, to a final value so that all of the pixel data related to that ASCII character is outputted and stored into temporary RAM 54. The final value is calculated by adding the initial address with a constant that is the block size of the pixel level data for each character. Then the data in temporary RAM 54 is transferred to full screen RAM 55, which previously received the screen data from removable ROM 3. The combination of data forms the final output screen, which is forwarded to television/monitor 4, as previously described.

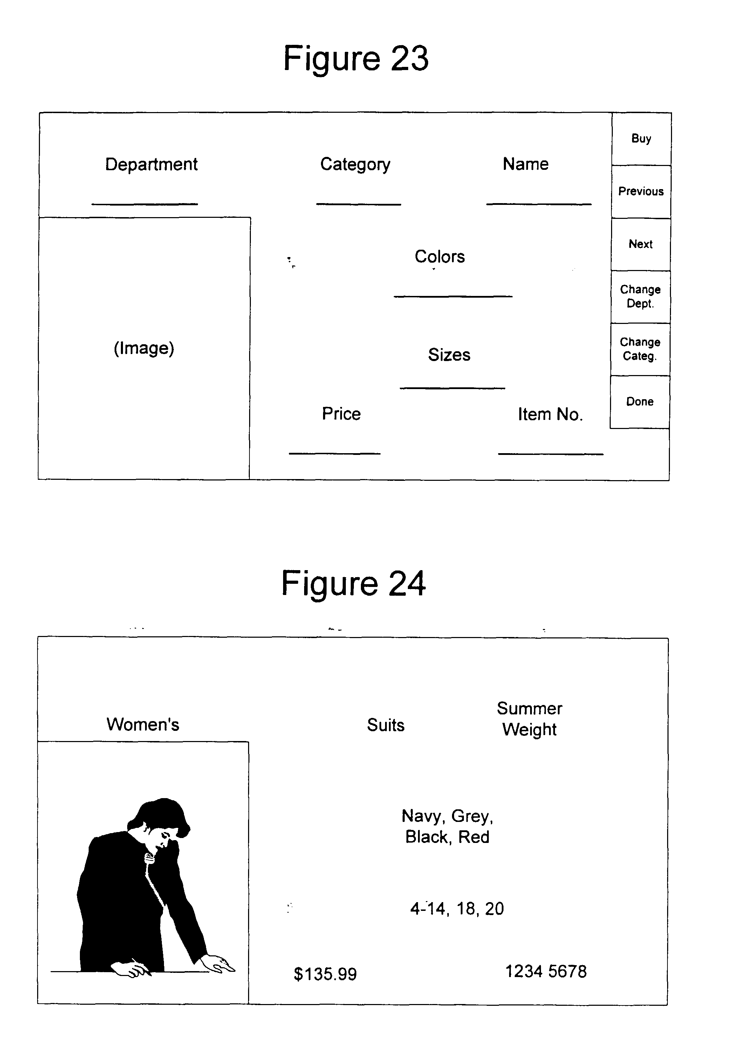

Instead of processing ASCII level data, cradle 2 can also process pixel level data. In this format, pre-processing unit 51 first separates the address of the pixel from the luminance and chrominance data of the received signals, and writes this data into temporary RAM 54. Controller 52 then forwards the template data into full screen RAM 55 from the removable smartcard processor/memory device 3. When all of the necessary data has been received and stored in temporary RAM 54 from mobile telephone 1, the data is downloaded to full screen RAM 55; in an embodiment of the present invention, certain pixel level data bits are overwritten with the data coming from temporary RAM 54. Referring back to Figures 23 and 24, the overwriting occurs such that the character strings "Checking," "$2,344.56" and "1234 5678" of Figure 24 overwrite the black boxes in Figure 23. Thus, the black boxes in Figure 7 represent blank areas within the pixel level data of the removable smartcard processor/memory device 3, which is overwritten by the data downloaded into temporary RAM 54.

Another method of transmitting and receiving data involves using either a control or data channel to transmit and receive data as well as audio signals to and from a customer service representative. If the customer views a screen that is not understood, the customer merely pushes the appropriate key to open a voice channel with the customer service representative.

As an example, suppose a customer is viewing the template screen for home mortgages, but wants to see checking account balance and cannot seem to find the correct template. The customer pushes button 46 or a key designated as a help key on the keypad on mobile telephone 1 or keypad 45, and cradle 2 immediately instructs mobile telephone 1 to call the customer service representative at the phone number stored in the memory of cradle 2 or smartcard processor/memory device 3. In addition, cradle 2 sends a "please wait" message to the screen until the customer service representative is reached. In addition, a hold is placed on the system until the customer service representative is reached so that the customer cannot change screens while waiting for the customer service representative.

The call is preliminary answered by computer 7 and put into a queue until the next customer service representative is available. As the call is answered by computer 7, an acknowledgment signal is forwarded from computer 7 to mobile telephone 1, informing mobile telephone 1 that the connection is completed.

In response to this acknowledgment signal, cradle 2/mobile telephone 1 combination forwards the screen template identification data to computer 7, along with customer identification data that is either obtained from the smartcard processor/memory device 3 or cradle 2 (if they are specialized for the user) or from a writeable memory within cradle 2 (i.e., this data is stored in the cradle when the customer enters it for first time authentication).

When computer 7 receives this data, it issues the appropriate query(ies) to database 15 to obtain customer-specific information.

Once database 15 returns the needed data, computer 7 builds a composite screen comprised of customer-specific data and template data similar to the screen the customer is viewing. This data is then electronically associated with the call in the queue.

When the customer representative answers the call, a monitor displays the screen the customer is viewing so the customer service representative has a frame of reference to better assist the customer. Additionally, a signal goes from computer 7 to mobile telephone 1/cradle 2 combination that releases the hold on the screen the customer is viewing. The customer representative and the customer converse using the audio channels of mobile telephone 1.

When the customer service representative determines what the problem is, the representative may either explain the solution verbally or transmit the appropriate data to the customer.

In order to transmit data, the customer service representative uses a computer system to preview the screen templates to transmit or selects from a menu containing brief descriptions of the screen templates. The customer representative hits the appropriate keys, and computer 7 sends a first signal to mobile telephone 1, which is a control signal to display the correct template stored in either cradle 2 or smartcard processor/memory device 3 on the user's screen. The second signal is a database query signal to retrieve the customer-specific data. After the customer-specific data is retrieved, this data is forwarded to mobile telephone 1. In this manner, the customer obtains the desired information without searching.

After the customer has the desired data, the customer may disconnect the voice channels by pushing button 46 again or by pressing the appropriate key on the keypad of mobile telephone 1 or keypad 45. After the voice channel is disconnected, the customer may continue to transmit to and receive data from computer 7.

With the addition of a real-time audio/video signal from a satellite, cable, antenna or other source of real time audio/video delivery, cradle 2 combines the three signals to form a single composite screen. This scenario arises when a customer desires to receive assistance from a customer service representative while viewing the screen, which contains both removable smartcard processor/memory device 3 based template data and data received via mobile telephone 1.

If the customer determines that he desires assistance from a customer service representative is needed, the customer presses button 47 on cradle 2 or the appropriate key on keyboard 5, or the keypad of mobile telephone 1, or keypad 45.

Like the audio customer representative interactions described above, cradle 2 puts a hold on the screen the customer is viewing. Additionally, mobile telephone 1/cradle 2 combination forwards data indicating which screen the customer is viewing, as well as customer identifying data and mobile telephone identifying data. The customer's request is then put into a queue until a customer service representative is available. While the customer is waiting, the screen identifying data and customer identifying data are used to build a screen so the customer service representative views what the customer views. One of the signals transmitted from mobile telephone 1 to computer 7, is an index of the plurality of screens used by the bank. By using an index and a library of the template screens stored at the main bank location, the time to transmit the entire image of the template screen is eliminated.

While the user is in the queue, the index is used to access the database and retrieve the template screen the user is viewing. In addition, the relevant information about the user, name, account balance, account number, etc., are also retrieved from the database. In addition, computer 7 establishes a television link between the customer and the customer representative center. This typically requires transmitting the image of the customer service representative to customer's home/business via either a satellite, a cable or a broadcast signal. In order to ensure security, the audio and video data from the customer representative is encrypted with a key. This way, no other customer may obtain information directed to another customer.

When a customer service representative becomes available, the representative retrieves the aggregate screen information and begins transmitting video and audio signals to the customer in an encrypted form. Also, either simultaneously, before or shortly after transmission begins, computer 7 forwards the key to the customer's mobile telephone 1 and cradle 2 so the customer service representative's audio and video data may be decrypted. Also, computer 7 releases the hold on the customer's screen.

The processor in cradle 2 demultiplexes, decodes and decrypts the video/audio signal and combines it with the template screen, and forwards the combined output to television/monitor 4 for the user to view so that an image of the customer representative appears in a corner of the screen as the representative explains what the customer is viewing on his screen, and the customer representative's voice data is routed to television/monitor 4, speaker 32 on cradle 2, or both. The user's voice is transmitted to the customer service representative via, for example mobile telephone 1, while the customer service representative's voice and image are transmitted to television/monitor 4 via satellite dish 12 or transmitted via cable or broadcast signals. If the user is lost on a particular screen, the customer service representative sees the screen where the user is lost, hears the user's question(s) and/or concern(s), and answers the user's question(s). This interactive format is fast, efficient and very personalized.

In this mode of operation, the customer service representative may also transmit screen data to cradle 2. The customer service representative does this by striking the appropriate key on the client computer and this issues a request for customer-specific data from the database (e.g., the dollar amount $2,345.28). Computer 7 transmits the data along with an identification code for the appropriate screen template. Cradle 2 retrieves the appropriate screen template from either the smartcard processor/memory device 3 or cradle 2 itself, and builds the composite screen as described above.

The customer service representative hears questions from the customer via a voice channel opened up between the customer's mobile telephone 1 and computer 7. The exchange continues until the customer strikes a key on the mobile telephone's keypad, button 47 or a key on keypad 45. Once the exchange is over, the mobile telephone voice channel and television channel are closed and the customer may request/retrieve data from the control/data channels as described above.

An alternative to this embodiment involves not using either a split screen or picture-in-picture template utilizing the live video images. Instead, when the user desires help, the customer service representative screen is imposed onto the entire television screen. Again, the user (customer) and the customer service representative converse normally except without the benefit of the user being able to view the last template screen the user was viewing before the user called for customer service.

In either embodiment, when the user and customer service representative are finished with the conversation, the user pushes a button on mobile telephone 1 that indicates the conversation is over. This clears the customer service representative to discuss issues with other customers and also returns the screen of the user back to the original screen appearing before the customer assistance representative was called.

### OTHER USES

The system of the present invention is also used for sending messages to other people. User #1 dials into the appropriate computer 7 via mobile telephone 1, mobile telephone system 6 and PSTN 10. The server forwards this call to user #2 over the PSTN, the mobile telephone network, and another mobile telephone (not shown). User #2 picks-up and receives an audio message informing user #2 that text data from another caller is about to be received. User #2 places the mobile telephone into the cradle, inserts the appropriate smartcard processor/memory device 3 (if needed) into cradle 2 and strikes an appropriate key or two on mobile telephone 1 indicating to the computer 7 that the user is ready to begin the conversation. Computer 7 synchronizes the two users through a handshaking protocol and sends a signal to user #1's system indicating that user #1 may send a message to user #2. User #1 types a message on keyboard 5 and views it on television/monitor 4. User #1 uses keyboard 5 to edit the text until it is acceptable. When the message is completed, user #1 hits RETURN or some other designated key to send the message to user #2.

In order for the message to be sent, the smartcard processor/memory device 3 or cradle 2 alone must do two things besides maintain the screen template. The first is to buffer the message as each user is typing it. The second is to format the message into a format suitable for transmission by mobile telephone 1. Once the user's outgoing message is properly formatted, cradle 2 forwards it to mobile telephone 1, which then transmits the message to mobile telephone network 6, over PSTN 10, to computer 7.

When received by the computer 7, the server processes the message by determining from a lookup table where the message is to be sent. The computer 7 determines the appropriate destination and forwards the message over PSTN 10, to the other tower and to the other mobile telephone (not shown). The other mobile telephone forwards the message to the other cradle, which translates the formatted message and displays it on the television screen template. User #2 then sends a message back to user #1 in the same manner.

There are alternatives to this messaging embodiment. First is the elimination of the text buffering. In this embodiment, the smartcard processor/memory device 3 is instead designed to have a buffer that stores two or three words of data or some other minimal amount of data. As soon as that buffer is full, it is formatted and sent to the other user. This eliminates the need for the first user to enter the equivalent of a "SEND" key for each message. Portions of each message are forwarded automatically, which provides a more seamless form of communication. This alternative embodiment also facilitates parallel message drafting. As the words are forwarded to the recipient, the recipient begins typing a response. Due to the split-screen nature of each user's television, each user may need to carefully craft the words transmitted to match up exactly with what the other is writing.

This messaging format of the present invention is particularly useful for the hearing-impaired to communicate in relative real time.

Another advantage of the present invention is the ability to create a record that is easily transferable and available for printing. On the smartcard processor/memory device 3 or within cradle 2, there is a memory that stores a predetermined number of words. Both outgoing and incoming messages are saved into this buffer, which can later be printed or downloaded into a word processing program or text editor.

Another embodiment of the present invention includes catalogs to purchase merchandise. Referring back to Figure 1, the user places a different smartcard processor/memory device 3, say from a clothing manufacturer, into cradle 2 and connects to that company's server. After the connection is made, a few introductory screens are displayed to the user, which may be either totally from the server, the smartcard processor/memory device 3, cradle 2, or a combination of all three. The user then views a directory of clothes by department. Examples include Men's, Women's, Petites, Girls, Boys, etc. This screen is static as the departments rarely change, so it is typically stored in either the smartcard processor/memory device 3 or cradle 2. The user selects the department in which to shop by inputting data via either the keypad on mobile telephone 1, keyboard 5 or keypad 45 on cradle 2.

The user's selection is typically forwarded to the smartcard processor/memory device 3 causing it to display a new screen template, which catalogs the types of clothes in which the user is interested. The categories include things such as Coats, Suits, Casual Wear, Shoes, Random, etc. Again, as the clothing categories don't change over time, this screen is typically saved in the smartcard processor/memory device 3.

When the user has selected a category, the smartcard processor/memory device 3 or cradle 2 sends a new screen template to television/monitor 4, as shown in Figure 23. The screen template provides a space for an image of the piece of clothing, its name, the category it is from, the department it is from, the available colors and sizes, prices, and item number. The server provides the missing data, as shown in Figure 24, using one of the methods described above. Cradle 2 merges the images shown in Figures 23 and 24 into one image for viewing by the user on the television.

An additional feature of the shopping smartcard processor/memory device 3 is the addition of mouse buttons in the upper right hand corner of the screen. The user uses a mouse either to buy the item, view another item in the category via previous and next button, change department, change category or exit the virtual store/catalog. Cradle 2 interprets the mouse signals and sends appropriate signals to the server and/or the smartcard processor/memory device. For example, if the user clicks on Buy, a buffer in the smartcard processor/memory device 3 or cradle 2 stores the non-image data (e.g., name, price, color, size). If the user clicks on the next or previous button, another garment in that category is forwarded to the mobile telephone from the computer 7, and the image viewed by the user is changed to show this new garment along with the associated information (e.g., prices, colors, available sizes).

Another feature of this embodiment is the utilization of image data in forming the screen viewed by the user. The server sends this image data, which cradle 2 or smartcard processor and/or memory device 3 understands, and translates the data into data viewable on a television screen. Thus, the cradle incorporates three sets of data. The first being from the smartcard processor/memory device 3, the second being non-image data from computer 7 (e.g., price) and the third being the image data from computer 7.

The present invention also utilizes push technology. For example, the user may leave the mobile telephone in the cradle at around 4:00 everyday. Computer 7 dials up mobile telephone 1 and pushes the top five news stories or the closing of the stock market to mobile telephone 1. Cradle 2 stores this data and computer 7 hangs-up on mobile telephone 1.

When the user is ready to view the data that has been pushed, the user simply turns on the television and inserts the appropriate smartcard processor/memory device into cradle 2 (if needed). Each story is alternatively displayed in a template on the screen along with mouse buttons which allow the user to toggle between the various sections of pushed information (e.g., different news stories or different stock quotes from different companies). The user may also decide on whether to save the pushed information or delete it.

In another form of using push technology, the user may leave mobile telephone 1 in cradle 2 while watching television. Again, at a particular time (e.g., the closing of the stock market) each day, the stock quotes are transmitted to mobile telephone 1 and scrolled across the top of the screen without interrupting the television broadcast.

Additionally, push technology can be used to place money onto a smartcard processor/memory device 3. For example, if a person's bank account receives a direct deposit from his employer at 12:00 am every other Monday, that person could have some of that money pushed onto a smartcard processor/memory device 3 instead of the bank account. Again, the computer 7 calls mobile telephone 1, establishes a connection via either the voice channels or by sending burst messages through the control channel, and forwards the money into the smartcard processor/memory device 3.

An important aspect of the invention involves the split between computing power of the processor in the cradle and the processing ability in the smartcard processor/memory device 3. The two work together in a client/server tandem such that some of the processing is handled by the smartcard processor/memory device 3 and some is handled by the processor in cradle 2.

In another embodiment, mobile telephone 1 receives data signals representative of HTML/HDML/XML, or such other protocol as becomes generally available on the World Wide Web. The processor in cradle 2 accepts the received data signals in HTML/HDML or other format. The smartcard processor/memory device 3 interprets HTML/HDML based data for the processor in cradle 2, and translates it into an image that can be displayed on television/monitor 4, such that a Web site can be accessed by the present invention via mobile telephone 1 and cradle 2. Thus, cradle 2 acts like a server in formatting and organizing the data while smartcard processor/memory device 3 performs the processing to get the data onto television/monitor 4.

Additionally, the present invention can access an e-mail account of the user. Much like accessing Web sites, the user may open, read, respond, delete, reply or compose e-mail messages via the keyboard and forward them to the appropriate recipient when using the appropriate card in the cradle. Again, cradle 2 acts like a client in that it receives e-mail messages and stores them until the user is ready to read them. The user inserts the appropriate smartcard processor/memory device 3 to read the messages in a client-like fashion.

The smartcards available for use with the above system vary in number. Some hold screen template data as described above. Others, however, may simply store encryption data that enables a customer to use the cradle to receive data. The smartcard processor/memory device 3 contains some personal information such as name, address, and perhaps even account numbers for various accounts such as checking, savings, a credit card and retirement fund. In addition, the smartcard processor/memory device 3 contains a personal identification number (PIN) that is unique to the customer. All of this data is encrypted so that it is unobtainable by someone without the PIN.

Also, the smartcard processor/memory device 3 may also obtain a key for encrypting data before it is transmitted to the computer 7 and for decrypting data that is received from the computer 7. In this manner, confidential data may be protected and transmitted with added security.

Another function of the smartcard processor/memory device 3 is to receive and disperse money. As noted above, the smartcard processor/memory device 3 may interact with a banking computer 7. The same smartcard could be used to receive money electronically such that the customer may take the smartcard out of the cradle 3 and use it to make purchases at stores or make purchases using the embodiment described in conjunction with Figures 23 and 24.

Alternatively, the customer may use a first smartcard that contains electronic money to make purchases using a second department store-type smartcard used in conjunction with Figures 21-24. Thus, when the customer pushes the purchase button shown in Figure 9, a screen appears on television/monitor 4 indicating that the customer should insert the smartcard containing the electronic money. After the smartcard processor/memory device 3 containing money is inserted into the cradle, cradle 2 automatically debits the money from the smartcard and forwards a message indicating that the purchase has been made and crediting the money to the store's account.

While a separate television/monitor 4 and keyboard 5 are shown in Figures 1 and 2, it is also possible to use a Universal Serial Bus (USB) or some other computer based interface port to connect the cradle to a computer. Such a connection allows coprocessing between cradle 2 and the computer as well as for more elaborate data structures to be input into the cradle for viewing on television/monitor 4. Additionally, complex video functions can be manipulated through a combination of data received from mobile telephone 1 and the computer where cradle 2 is kept relatively simple and the computer processes more complex data processes.

## Claims

1. A data manipulation device comprising:
at least one coupling for coupling with a telephone for receiving data external to the data manipulation device;
an output port for transmitting output data;
at least one memory element storing local data;
at least one processing element for receiving external data via the at least one coupling and the at least one memory element and processing the external data and the local data so as to form the output data.

2. The data manipulation device according to claim 1, wherein the at least one memory element is removable.

3. The data manipulation device according to claim 1, wherein the at least one memory element is fixedly connected to processing element.

4. The data manipulation device according to claim 1, wherein the at least one processing element is removable.

5. The data manipulation device according to claim 2, wherein the at least one memory element is located on a smartcard.

6. The data manipulation device according to claim 3, wherein the at least one processing element is located on a smartcard.

7. The data manipulation device according to claim 1, wherein the at least one memory element and the at least one processing element are located on a single smartcard.

8. The data manipulation device according to claim 1, further comprising a port for connecting a keyboard thereto.

9. The data manipulation device according to claim 1, wherein the at least one coupling further comprises a connection to the telephone via an electrical connection.

10. The data manipulation device according to claim 1, wherein the at least one coupling further comprises a connection to the telephone via an audio connection.

11. A method for forming composite data comprising:
receiving external data from an external source;
downloading local data from a locally coupled memory; and
combining the external data and the local data so as to form the composite data.

12. The method of claim 11 further comprising:
receiving user input related to a request for one type of external data.

13. The method of claim 12 further comprising:
transmitting the request for one type of external data to the external source.

14. The method of claim 11, wherein the external data further comprises video or audio data from a customer service representative.

15. The method of claim 14, wherein request data is transmitted to the customer service representative.

16. The method of claim 15, wherein the request data originates from an audio signal.

17. The method of claim 15, wherein the request data originates from digital data.

18. The method of claim 15, wherein the video or audio data from the customer service representative is carried over a channel different from a channel used to carry the request data.

19. A method for transmitting and receiving data over a telephone network comprising:
formulating a data request for transmission via a wireless telephone network;
transmitting the data request over the wireless telephone network;
receiving the data request at a computer; and
routing the data request to a database for retrieval of the requested data.

20. The method for transmitting and receiving data according to claim 19, wherein the data request comprises at least one of the following types of data consisting of alphanumeric data, video data, and audio data.

21. The method for transmitting and receiving data according to claim 19, wherein formulating a data request for transmission via a wireless telephone network comprises:
retrieving information from at least one of the following sources consisting of a memory element and a manual information input.

22. The method for transmitting and receiving data according to claim 21, wherein the memory element is located on a smartcard.

23. The method for transmitting and receiving data according to claim 21, wherein the manual information input is a keyboard.

24. A method for requesting and receiving data comprising:
accepting customer information request data in response to at least one voice prompt;
retrieving answer data in response to the accepted customer information request data from at least one source;
formatting the answer data for transmittal over a public access network;
transmitting the formatted answer data over the public access network;
receiving the formatted answer data from the public access network via a receiver element; and
reformatting the formatted answer data for reading by the customer.

25. The method for requesting and receiving data according to claim 24, wherein the answer data is in digital form.

26. The method for requesting and receiving data according to claim 25, wherein formatting the answer data comprises:
encrypting the answer data; and
converting the answer data to analog form.

27. The method for requesting and receiving data according to claim 24, wherein reformatting the formatted answer data comprises:
converting the formatted answer data to digital form; and
decrypting the formatted answer data.

28. The method for requesting and receiving data according to claim 24, wherein transmitting the formatted answer data over the public access network comprises scrambling a signal carrying the formatted answer data.

29. The method for requesting and receiving data according to claim 24, wherein reformatting the formatted answer data comprises descrambling the signal carrying the formatted answer data.

30. The method for requesting and receiving data according to claim 24, wherein the public access network is a television network.

31. The method for requesting and receiving data according to claim 30, wherein the television network is a local cable network.
